# EUROPEAN PATENT APPLICATION

(11) **EP 4 734 495 A1**
(43) Date of publication of application: **29.04.2026**
(21) Application number: 25204941.6
(22) Date of filing: 26.09.2025
(51) Int. Cl.: H04N 1/00, H04N 1/34, H04N 1/44

(54) **COMPUTER PROGRAM FOR CONTROL DEVICE, CONTROL DEVICE, SYSTEM AND METHOD**

(30) Priority: 28.10.2024 JP 2024189329
(71) Applicant: BROTHER KOGYO KABUSHIKI KAISHA, Aichi-ken 467-8561 (JP)
(72) Inventor: HATA, Megumi, Nagoya, 467-8562 (JP)
(74) Representative: Kuhnen & Wacker Patent- und Rechtsanwaltsbüro PartG mbB

(57) **Abstract**

A computer program (42) for a control device (30) is disclosed. The computer program (42) may causes a processor (32) of the control device (30) to function as: a unit (32) to configured to display, at a terminal device (10), a first setup screen (SC4, SC5, SC6) for prompting a first setup to use an image processing device (100); a unit (32) to configured to, before the first setup screen (SC4, SC5, SC6) is displayed, display a login screen (SC3) at the terminal device (10), the login screen (SC3) being for a login to a server (200) configured to provide a service for the image processing device (10); and a unit (32) to configured to, after the first setup has been completed, display a second setup screen (SC7) at the terminal device (10), the second setup screen (SC7) being for prompting a second setup to subscribe to the service (200).

## Description

### TECHNICAL FIELD

This specification is related to a technology for displaying a screen to a terminal device.

### BACKGROUND ART

Japanese Patent Application No.2017-068722 discloses shipping services of shipping consumable articles for multifunctional devices.

### SUMMARY

Image processing devices, such as multifunctional devices, are controlled by a terminal device communicable with the image processing devices. A computer program running in the terminal device is used to control the image processing devices. The disclosure herein provides a technology for considering service subscription statuses of image processing devices for setups executed according to a computer program.

A computer program (42) for a control device (30) is disclosed herein. The computer program (42) may causes a processor (32) of the control device (30) to function as: a first display unit (32) to configured to display, at a terminal device (10), a first setup screen (SC4, SC5, SC6) for prompting a first setup to use an image processing device (100); a second display unit (32) to configured to, before the first setup screen (SC4, SC5, SC6) is displayed, display a login screen (SC3) at the terminal device (10), the login screen (SC3) being for a login to a server (200) configured to provide a service for the image processing device (10); and a third display unit (32) to configured to, after the first setup has been completed, display a second setup screen (SC7) at the terminal device (10), the second setup screen (SC7) being for prompting a second setup to subscribe to the service (200).

According to the configuration above, a login to the service-providing server is prompted before the first setup. By logging into the server before the first setup, a service subscription status of the image processing device becomes available to the control device prior to the second setup. Thus, the second setup can be executed following the first setup, taking the service subscription status of the image processing device into consideration.

The computer program (42) further may causes the processor (32) to function as: a receiving unit (32) configured to, in a case where a login to the server (200) succeeds in response to a user operation on the login screen (SC3), receive subscription status information from the server (200), wherein the subscription status information indicates whether a user identified by user information used in the login to the server (100) has subscribed to the service, wherein in a case where the subscription status information received from the server (200) indicates that the user has not subscribed to the service (200) yet, the second setup screen (SC7) is displayed at the terminal device (10), and in a case where the subscription status information received from the server (200) indicates that the user has already subscribed to the service (200), the second setup screen (SC7) is not displayed at the terminal device (10).

The computer program (42) further may cause the processor (32) to function as: a determining unit (32) configured to, in a case where a login to the server (200) succeeds in response to a user operation on the login screen (SC3), determine whether the image processing device (100) is registered in the server (200) in association with other user information different from user information used in the login to the server (200), wherein in a case where it is determined that the image processing device (100) is not registered in the server (200) in association with the other user information, the second setup screen (SC7) is displayed at the terminal device (10), and in a case where it is determined that the image processing device (100) is registered in the server (200) in association with the other user information, the second setup screen (SC7) is not displayed at the terminal device (10).

The server (200) may be configured to provide two or more services for the image processing device (100), the service may be a service the image processing device (100) is able to use among the two or more services, and the second setup screen (SC7) for prompting subscription to the service may be displayed at the terminal device (10).

In a case where an instruction for a direct connection with the image processing device (100) is inputted to the first setup screen (SC4, SC5, SC6) at the terminal device (10), the second setup screen (SC7) may not be displayed at the terminal device (10).

The image processing device (100) may have a plurality of functions including a print function and a scan function, and the computer program (42) further may cause the processor (32) to function as: a fourth display unit (32) configured to, in a case where the terminal device (10) receives a user operation for skipping a login to the server (200) via the login screen (SC3), display a predetermined screen (SC9) at the terminal device (10) after the first setup has been completed, the predetermined screen (SC9) including an object for input of an instruction to use the print function and an object for input of an instruction to use the scan function.

The server (200) may be configured to provide two or more services for the image processing device, and in a case where the terminal device (10) receives a user operation for skipping a login to the server (200) via the login screen (SC3), the second setup screen (SC7) for subscription to a first service of the two or more services may be displayed at the terminal device (10), the computer program (42) further may cause the processor (32) to function as: a first display determining unit (32) configured to, in a case where a login to the server (200) succeeds in response to a user operation on a screen different from the login screen (SC3) after the second setup screen (SC7) is displayed at the terminal device (10), determine whether a third setup screen (SC7) is to be displayed at the terminal device (10) based on user information used in the login to the server, the third setup screen (SC7) being for subscription to a second service of the two or more services.

The computer program (42) further may cause the processor (32) to function as: a fifth display unit (32) configured to, in a case where the terminal device (10) receives a user operation for instructing a setup for a new image processing device (100) after the first setup and the second setup have been completed and the terminal device (10) is not logged in the sever (200), display a second login screen for a login to the server (200) at the terminal device (10); and a second display determining unit (32) configured to, in a case where a login to the server (200) succeeds in response to a user operation on the second login screen, determine whether a fourth setup screen (SC7) is to be displayed at the terminal device (10) based on user information used in the login to the server (200), the fourth setup screen (SC7) being for subscription to a service for the new image processing device (100).

The image processing device (100) may be a printing device, and the service may include a service of automatically shipping a consumable article for the printing device.

A control device (30) is disclosed herein. The control device (30) may comprise: a first display unit (32) configured to display, at a terminal device (10), a first setup screen (SC4, SC5, SC6) for prompting a first setup to use an image processing device (100); a second display unit (32) configured to, before the first setup screen (SC4, SC5, SC6) is displayed, display a login screen (SC3) at the terminal device (10), the login screen (SC3) being for a login to a server (200) configured to provide a service for the image processing device (100); and a third display unit (32) configured to, after the first setup has been completed, display a second setup screen (SC7) at the terminal device (10), the second setup screen (SC7) being for prompting a second setup to subscribe to the service (200).

A system (2) is disclosed herein. The system (2) may comprise: a first display unit (32) configured to cause a terminal device (10) to display a first setup screen (SC4, SC5, SC6) for prompting a first setup to use an image processing device (100); a second display unit (32) configured to, before the first setup screen (SC4, SC5, SC6) is displayed, cause the terminal device (10) to display a login screen (SC3) for a login to a server (200) configured to provide a service for the image processing device (100); and a third display unit (32) configured to, after the first setup has been completed, cause the terminal device (10) to display a second setup screen (SC7) for prompting a second setup to subscribe to the service (200)

A method of causing a terminal device (10) to display screens is disclosed herein. The method of causing a terminal device (10) to display screens may comprise: causing the terminal device to (10) display a first setup screen (SC4, SC5, SC6) for prompting a first setup to use an image processing device (100); causing the terminal device (10) to, before the first setup screen (SC4, SC5, SC6) is displayed, display a login screen (SC3) for a login to a server (200) configured to provide a service for the image processing device (100); and causing the terminal device (10) to, after the first setup has been completed, display a second setup screen (SC7) for prompting a second setup to subscribe to the service (200).

### BRIEF DESCRIPTION OF DRAWINGS

FIG. 1 is a schematic diagram of a communication system.
FIG. 2 is a flowchart of a setup process.
FIG. 3 is a diagram illustrating various screens.
FIG. 4 is a flowchart of a display control process.
FIG. 5 is a flowchart of a post-setup process.

### DESCRIPTION

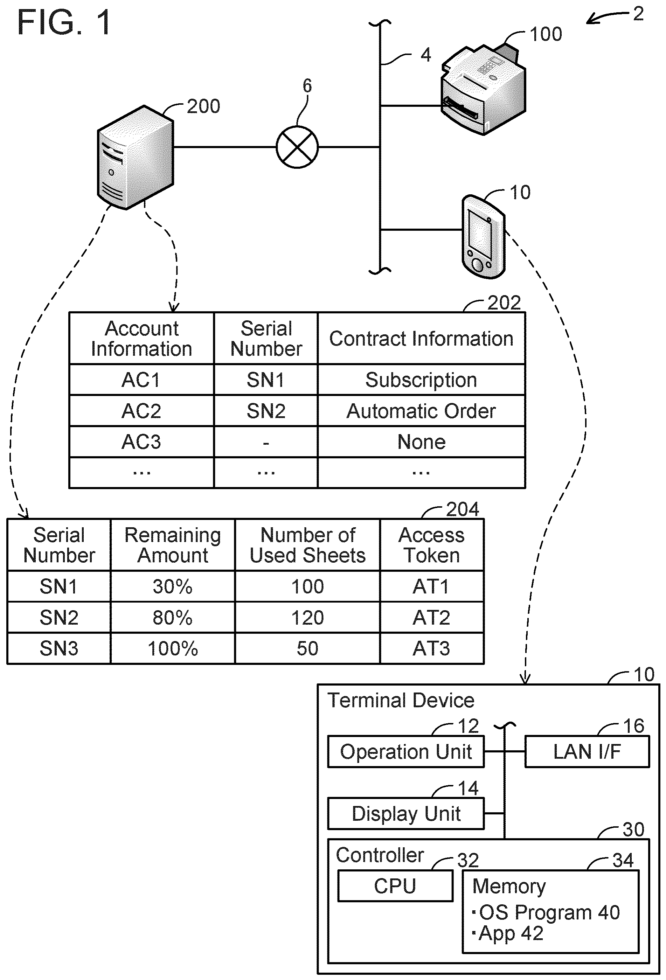

### Configuration of Communication System 2: FIG. 1

A communication system 2 comprises a terminal device 10, a multifunction peripheral (MFP) 100, and a service server 200. The terminal device 10 is, for example, a laptop PC, a smartphone, a tablet terminal, or a desktop PC. The MFP 100 is a peripheral device of the terminal device 10 and has multiple functions including, for example, a print function and a scan function.

The MFP 100 comprises a print execution unit configured to execute the print function. The print execution unit comprises a print engine of inkjet scheme, electrophotographic scheme, or thermal scheme. A print engine of inkjet scheme comprises a print head configured to eject ink drops. A print engine of electrophotographic scheme comprises, for example, a photoreceptor and an exposure device configured to emit light to expose the photoreceptor to the light. A print engine of thermal scheme comprises a print head configured to emit heat from a heater. The MFP 100 further comprises a scan execution unit configured to execute the scan function. The scan execution unit comprises a scanner engine including an image sensor of, for example, CCD (charge-coupled device) image sensor scheme or CIS (contact image sensor) scheme.

The terminal device 10 and the MFP 100 are connected to a local area network (LAN) 4. The LAN 4 is a wireless LAN. The wireless LAN is, for example, Wi-Fi. In a modification, the LAN 4 may be a wired LAN. The LAN 4 is connected to the internet 6. The service server 200 is connected to the internet 6. The terminal device 10 and the MFP 100 are communicable with the service server 200 via the LAN 4 and the internet 6. The service server 200 is established on the internet 6, for example, by the vendor of the MFP 100. The number of peripheral devices connected to the LAN 4 is not limited to one, and a plurality of peripheral devices (e.g., a plurality of MFPs 100) may be connected to the LAN 4.

The service server 200 is configured to provide a subscription service and an automatic order service. The subscription service charges only the base fee in case the number of print sheets used within a predetermined period of time (e.g., one month) is equal to or less than the upper limit of available print sheets (e.g., 100 sheets), while the subscription service charges, in case the number of print sheets used within the predetermined period of time exceeds the upper limit, a sum of the base fee and an additional fee for the extra print sheets used. In other words, the subscription service permits service users to use print sheets up to the upper limit within the predetermined period of time at the basic fee. The subscription service includes an automatic shipping service. The automatic shipping service is a service of automatically shipping a new cartridge when a remaining amount of color material (e.g., ink, toner, etc.) in a color material cartridge mounted in the MFP 100 reaches a predetermined amount or less. The price of a new cartridge is included in the base fee of the subscription service.

The automatic order service is a service of automatically ordering a new cartridge when a remaining amount of color material in a color material cartridge mounted in the MFP 100 reaches a predetermined amount or less. The automatic order service does not have a monthly base fee and charges the price of a new cartridge every time it is ordered. Similar to the subscription service, the automatic order service also includes the automatic shipping service.

The service server 200 may be configured to provide other services different from the automatic order service and the subscription service. The other services include, for example, a warranty service for the MFP 100 and a remote print service of remotely causing the MFP 100 to execute printing via the internet 6.

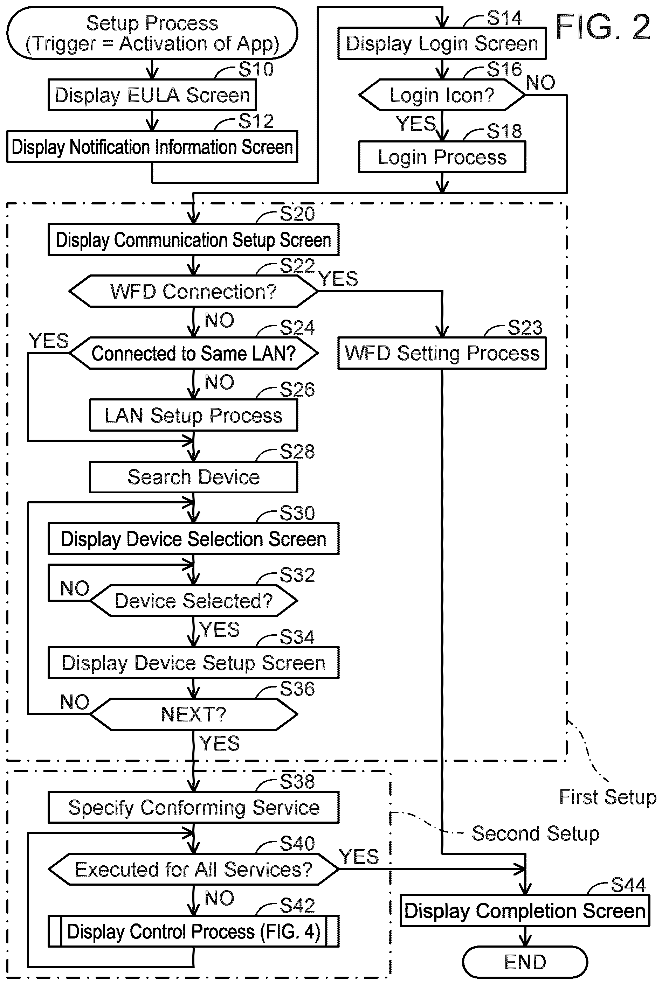

Further, the service server 200 has a user authentication function of managing user authentication information (e.g., account information) and executing user authentication. The user authentication is, for example, a process of authenticating account information received from the terminal device 10, which will be detailed in connection with S18 in FIG. 2. The service server 200 may comprise a plurality of servers including first and second servers interacting with each other. In this case, for example, the first server may have the user authentication function and the second server may have a function of executing the automatic shipping service.

The service server 200 stores a service table 202 and a management table 204. In the service table 202, account information, serial numbers, and contract information are stored in association with each other. Each account information includes a user name and a password. Each serial number identifies a peripheral device (e.g., 100) used by the user indicated by the associated account information. Each contract information indicates a contract status of service used by the user indicated by the associated account information. For example, in case a user has been contracted to use the subscription service, the contract information indicates a value "Subscription". In case a user has been contracted to use the automatic order service, the contract information indicates a value "Automatic Order". In case a user has not contracted to use any services, the contract information indicates a value "None". The contract herein may be an online electronic contract without involving any paper contract documents or a contract involving paper contract documents. Further, "a user has been contracted to use a service" can be rephrased as "the user has already subscribed to the service", and "a user has not contracted to use a service" can be rephrased as "the use has not subscribed to the service yet".

The management table 204 manages operation statuses of multiple MFPs 100. In the management table 204, serial numbers, remaining amounts in color cartridges, numbers of used print sheets, and access tokens are stored in association with each other. Each number of used print sheets indicates a total of print sheets used by the MFP 100 identified by the associated serial number within the predetermined period of time. The access tokens are tokens issued by the service server 200 to the MFPs 100. The service server 200 uses the access tokens to establish always-on connections with the MFPs 100. The service server 200 periodically receives a remaining amount and number of used print sheets from each of the MFPs 100 through the always-on connections and updates the information in the management table 204. The always-on connections herein are, for example, Extensible Messaging and Presence Protocol (XMPP) connections. The management table 204 may not store the numbers of used print sheets for users that have contracted to use the automatic order service.

The service server 200 may be a single server or a combination of multiple servers. For example, the service server 200 may be a combination of a server storing the service table 202 and a server storing the management server 204.

### Configuration of Terminal Device 10: FIG. 1

The terminal device 10 comprises an operation unit 12, a display unit 14, a LAN interface 16, and a controller 30. Hereinafter, an interface is abbreviated as "I/F". The operation unit 12 is a user I/F through which a user can input various information to the terminal device 10. The operation unit 12 comprises, for example, a touch screen on which software keys (i.e., operation objects) are displayed, hardware keys, or both of them. The operation objects are, for example, icons, tabs, or boxes. The hardware keys are, for example, buttons or switches. The display unit 14 is a display or panel for displaying various information. The panel may be or may not be a touch screen. The panel is, for example, a liquid crystal panel or an organic EL panel. The LAN I/F 16 is an I/F for communication via the LAN 4 and is connected to the LAN 4.

The controller 30 comprises a CPU 32 and a memory 34. The memory 34 comprises a main storage and an auxiliary storage. The main storage includes a RAM and a cache memory, although this is merely an example. The auxiliary storage may be a ROM, a flash memory, a solid state drive (SSD), a hard disk drive (HDD), or any combination thereof, although this is merely an example. The CPU 32 executes various processes according to programs 40 and 42 loaded from the auxiliary storage to the main storage.

An OS program 40 and an application program 42 are stored in the auxiliary storage of the memory 34. Hereinafter, the application program 42 is abbreviated as "the app 42". The OS program 40 controls basic operations of the terminal device 10. The app 42 causes the MFPs 100 to execute the print function and the scan function. Further, the app 42 provides service-related information to the user.

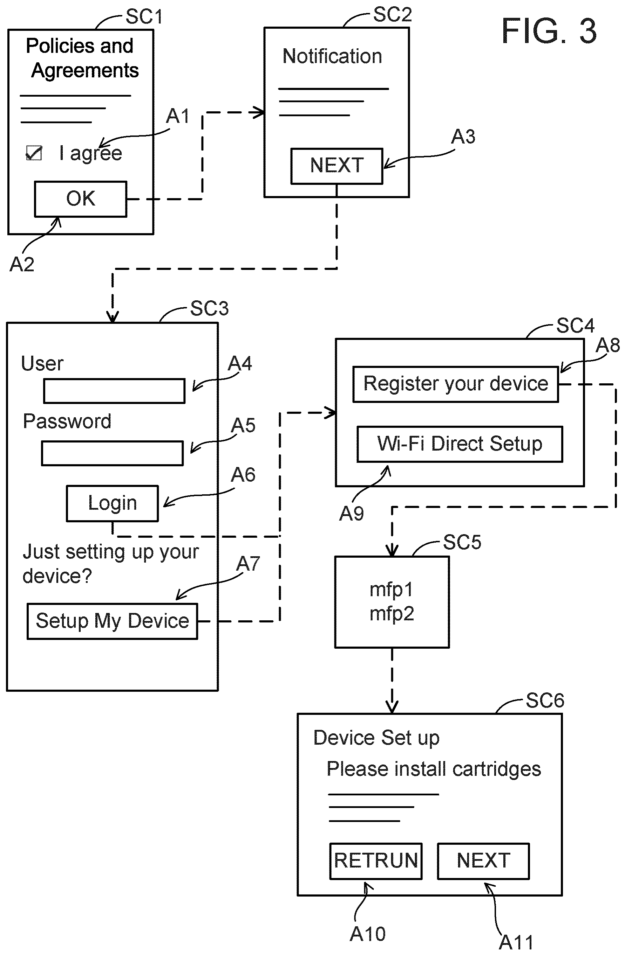

### Setup Process: FIGS. 2 and 3

Referring to FIG. 2, a process executed by the CPU 32 according to the app 42 is described. The process of FIG. 2 is a setup process triggered by the app 42 being activated after the app 42 has been installed. FIG. 3 illustrates various screens displayed during the process of FIG. 2.

In S10, the CPU 32 causes the display unit 14 to display an end-user license agreement (EULA) screen SC1. The EULA screen SC1 includes a checkbox A1 for the user to receive a license agreement on the app 42 and an OK button A2. The CPU 32 proceeds to S12 in response to the checkbox A1 being checked and the OK button A2 being selected.

In S12, the CPU 32 causes the display unit 14 to display a notification information screen SC2. The notification information screen SC2 provides information on a notification function provided by the app 42. The notification function is a function of notifying, for example, update information of the app 42, a new function of the app 42, maintenance information of the service server 200, new functions of services, changes in services, discount information of consumable articles, promotional information, and release information of firmware for the MFPs 100. The notification function includes, for example, push notification. The notification information screen SC2 includes an icon A3 to proceed to the next step. The CPU 32 proceeds to S14 in response to the icon A3 being selected.

In S14, the CPU 32 causes the display unit 14 to display a login screen SC3. The login screen SC3 displays a user name entry field A4, a password entry field A5, a login icon A6, and a device setup icon A7. Instead of a user name, an e-mail address used by a user indicated by a user name may be entered to the user name entry field A4. The login icon A6 is an icon for requesting a login based on account information (i.e., a user name and a password) entered to the user name entry field A4 and the password entry field A5. The device setup icon A7 is an icon for setting up a peripheral device to be used without requesting a login.

In S16, the CPU 32 determines whether the login icon A6 has been selected by the user. The CPU 32 proceeds to S18 in response to determining that the login icon A6 has been selected by the user (YES in S16).

In S18, the CPU 32 executes a login process to log in to the service server 200. Specifically, the CPU 32 sends the service server 200 a login request including the account information entered to the user name entry field A4 and the password entry field A5. In case authentication for the account information included in the login request succeeds in the service server 200, the CPU 32 receives from the service server 200 a token corresponding to the account information for which the authentication has succeeded. This token is information used to establish a login session having a predetermined expiration period. The CPU 32 uses the token received from the service server 200 to establish a login session with the service server 200. When S18 is completed, the CPU 32 proceeds to S20.

The CPU 32 skips S18 (i.e., does not log in to the service server 200) and proceeds to S20 in response to determining that the device setup icon A7 has been selected by the user (NO in S16). From S20 onward, a first setup to use the MFP 100 via the app 42 and a second setup to subscribe to a service provided by the service server 200 are executed. A sequence from S20 to S36 corresponds to the first setup and a sequence from S38 to S42 corresponds to the second setup. The first setup and the second setup may be executed after the login session with the service server 200 has been established, or may be executed without the establishment of the login session with the service server 200.

In S20, the CPU 32 causes the display unit 14 to display a communication setup screen SC4. The communication setup screen SC4 is a screen for setting a communication scheme to be used to communicate with the MFP 100. The communication setup screen SC4 includes an icon A8 for the user to instruct use of the LAN 4 as the communication scheme and an icon A9 for the user to instruct use of Wi-Fi Direct (registered trademark) as the communication scheme. Hereinafter, Wi-Fi Direct is abbreviated as "WFD".

In S22, the CPU 32 determines whether the icon A9 in the communication setup screen SC4 has been selected by the user. The CPU 32 proceeds to S23 in response to determining that the icon A9 has been selected by the user (YES in S22). In S23, the CPU 32 executes a WFD setup process to establish a wireless connection according to WFD with the MFP 100. For example, in the WFD setup process, the CPU 32 acquires, from the MFP 100, WFD information used to join a wireless network according to WFD formed by the MFP 100. Then, the CPU 32 uses the WFD information to establish a wireless connection according to WFD with the MFP 100. For example, the CPU 32 acquires the WFD information from the MFP 100 via near field communication (NFC). In a modification, the WFD information may be displayed on the panel of the MFP 100 and the WFD information may be acquired from the MFP 100 by the user inputting the WFD information to the terminal device 10.

When S23 is completed, the CPU 32 skips steps of the second setup (i.e., S38, S40, and S42) and causes the display unit 14 to display a completion screen indicating the completion of setup in S44. When S44 is completed, the CPU 32 ends the process of FIG. 2.

The CPU 32 proceeds to S24 in response to determining that the icon A8 in the communication setup screen SC4 has been selected by the user (NO in S22). In S24, the CPU 32 determines whether one or more setup-target MFPs 100 and the terminal device 10 are currently connected to the same LAN 4. For example, the CPU 32 causes the display unit 14 to display a query screen for querying as to whether one or more setup-target MFPs 100 and the terminal device 10 are connected to the same LAN 4. The CPU 32 makes a determination of YES in S24 in response to selection of YES being made in the query screen. In contrast, the CPU 32 makes a determination of NO in S24 in response to selection of NO being made in the query screen. In a modification, the CPU 32 may search through the LAN 4 to which the terminal device 10 is currently connected and make the determination of YES in S24 in case one or more setup-target MFPs 100 were found in the LAN 4. That is, the CPU 32 may automatically determine whether one or more setup-target MFPs 100 and the terminal device 10 are connected to the same LAN 4 or not.

The CPU 32 proceeds to S26 in response to determining that one or more setup-target MFPs 100 and the terminal device 10 are not connected to the same LAN 4 currently (NO in S24). In S26, the CPU 32 executes a LAN setup process to connect the one or more MFPs 100 to the LAN 4. For example, in the LAN setup process, the CPU 32 uses, for example, ad hoc communication of Wi-Fi or WFD to establish a wireless connection with each of the one or more MFPs 100. The CPU 32 then sends, to each of the one or more MFPs 100, wireless setup information (e.g., an SSID, a passkey) of the LAN 4 to which the terminal device 10 is currently connected, via the wireless connections. Then, each of the one or more MFPs 100 uses the wireless setup information received from the terminal device 10 to connect to the LAN 4. When S26 is completed, the CPU 32 proceeds to S28. The CPU 32 skips S26 and proceeds to S28 in response to determining that the one or more setup-target MFPs 100 and the terminal device 10 are currently connected to the same LAN 4 (YES in S24).

In S28, the CPU 32 searches for one or more peripheral devices (e.g., MFPs 100) connected to the LAN 4. In S30, the CPU 32 causes the display unit 14 to display a device selection screen SC5. The device selection screen SC5 displays a list of peripheral devices that were found in S28 within the LAN 4 (e.g., a list including model names "mfp1" and "mfp2"). The user selects one peripheral device (e.g., the MFP 100 having the model name "mfp1") from the list displayed in the device selection screen SC5. In this way, a peripheral device to be controlled according to the app 42 (i.e., a control target of the app 42) is selected.

In S32, the CPU 32 monitors whether one peripheral device has been selected in the device selection screen SC5. The CPU 32 proceeds to S34 in response to determining that one peripheral device has been selected in the device selection screen SC5 (YES in S32). The monitoring of S32 continues until one peripheral device is selected in the device selection screen SC5. For example, in case the model name "mfp1" has been selected in the device selection screen SC5, the CPU 32 acquires, from the MFP 100 having the model name "mfp1", its detailed information such as the serial number of the MFP 100 via the LAN 4. As a result, the information on the control target of the app 42 is registered in the app 42. The number of peripheral devices registered in the app 42 as control targets is not limited to one, and two or more peripheral devices may be registered in the app 42 as control targets.

In a modification, the CPU 32 may skip the sequence from S26 to S32 and proceeds to S34 in response to determining that the one or more setup-target MFPs 100 and the terminal device 10 are currently connected to the same LAN 4 (YES in S24). That is, the CPU 32 may automatically select an MFP 100 that is connected to the LAN 4 to which the terminal device 10 is connected as a control target.

In S34, the CPU 32 causes the display unit 14 to display a device setup screen SC6. The device setup screen SC6 includes a message providing information on initial setup for the MFP 100, a RETURN icon A10, and a NEXT icon A11. The initial setup for the MFP 100 includes basic setups to use the MFP 100 such as attachment of a color material cartridge. When the initial setup for the MFP 100 is completed, the user selects the NEXT icon A11. In contrast, when the user mistakenly selected an unintended peripheral device in the device selection screen SC5, the user selects the RETURN icon A10.

In S36, the CPU 32 determines whether the NEXT icon A11 in the device setup screen SC6 has been selected by the user. The CPU 32 proceeds to S38 in response to determining that the NEXT icon A11 has been selected by the user (YES in S36). That is, the CPU 32 completes the first setup and proceeds to the second setup. In contrast, the CPU 32 returns to S30 in response to determining that the RETURN icon A10 has been selected by the user (NO in S36).

In S38, the CPU 32 specifies one or more services the peripheral device selected in S32 (termed "the selected device" hereinafter) is able to use (termed "one or more available services") from among the multiple services provided by the service server 200. For example, the selected device is able to use the automatic order service but may not be able to use the subscription service because the selected device may not be able to use a subscription service-dedicated color material cartridge shipped through the subscription service. In another example, the selected device may not be able to use the remote print service. The configuration above allows for promotion of service(s) the selected device is able to use only.

In S38, a database indicating services the peripheral devices are able to use is used. This database is stored in the memory 34 of the terminal device 10 via the app 42. The CPU 32 uses the database in the memory 34 to execute S38. In a modification, the database may be stored in a server on the internet 6. Then, the CPU 32 may receive the database from the server and use the received database to execute S38.

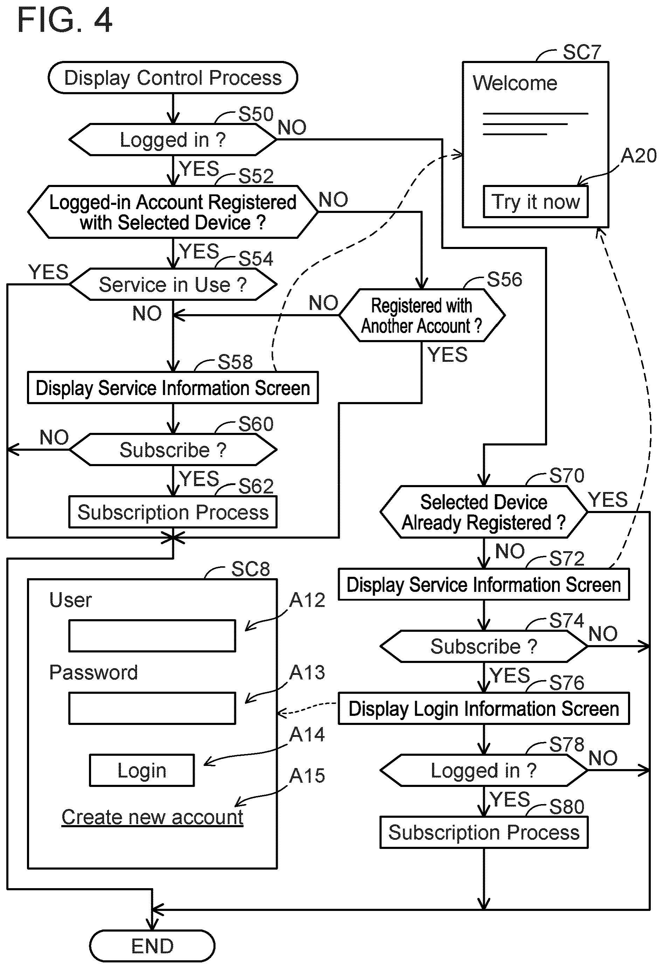

In S40, the CPU 32 determines whether a display control process in S42 (which will be described later) has been executed for all of the one or more available services. The CPU 32 proceeds to S42 in response to determining that the display control process has not been executed for all of the one or more available services (NO in S40). In S42, the CPU 32 selects one available service from the one or more available services. The CPU 32 then executes the display control process that controls whether to display a screen that provides information on the selected available service. The display control process will be detailed referring to FIG. 4. When S42 is completed, the CPU 32 returns to S40.

The CPU 32 proceeds to S44 in response to determining that the display control process has been executed for all of the one or more available services (YES in S40).

### Display Control Process: FIG. 4

In S50, the CPU 32 determines whether the login session with the service server 200 is present. The CPU 32 proceeds to S52 in response to determining that the login session with the service server 200 is present (YES in S50).

In S52, the CPU 32 determines whether the selected device has been registered in the service table 202 in association with the account information used for the currently established login session. For example, the CPU 32 sends the service server 200 a query including the serial number of the selected device via the login session. In case the serial number included in the query is in the service table 202 and this serial number is associated with the account information corresponding to the login session in the service table 202, the service server 200 sends the terminal device 10 a response indicating that the selected device has been registered in association with the logged-in account information. In case the serial number included in the query is in the service table 202 but this serial number is associated with another account information in the service table 202, the service server 200 sends the terminal device 10 a response indicating that the selected device has been registered in association with another account information. In case the serial number included in the query is not in the service table 202, the service server 200 sends the terminal device 10 a response indicating that the selected device has not been registered in the service table 202. The CPU 32 makes a determination of YES in S52 in case the response to the query of S52 indicates that the selected device has been registered in association with the logged-in account information. In a modification, the CPU 32 may receive the serial number associated with the logged-in account information from the service server 200 and determine whether the received serial number matches the serial number of the selected device.

The CPU 32 proceeds to S54 in response to determining that the selected device has been registered in association with the logged-in account information (YES in S52). In S54, the CPU 32 determines whether the user indicated by the logged-in account information has already subscribed to the available service selected in S42 of FIG. 2 (termed "the selected service" hereinafter). For example, the CPU 32 queries the service server 200 as to the contract information associated with the logged-in account information in the service table 202. In case a response from the service server 200 indicates the selected service, the CPU 32 determines that the user has already subscribed to the selected service. In contrast, in case the response from the service server 200 indicates a service other than the selected service or "none", the CPU 32 determines that the user has not subscribed to the selected service yet.

The CPU 32 proceeds to S58 in response to determining that the user indicated by the logged-in account information has not subscribed to the selected service yet (NO in S54). In S58, the CPU 32 causes the display unit 14 to display a service information screen SC7. The service information screen SC7 prompts the user to use the selected service. The service information screen SC7 may include a message prompting the user to subscribe to the selected service. For example, in case the selected service is the subscription service, the message says, for example, "Set up Your Subscription!", "Try it now! Subscribe", "Why don't you subscribe to the subscription service", or "Would you like to subscribe to the subscription service?". For example, in case the selected service is the automatic order service, the message says, for example, "Would you like to subscribe to the automatic order service?". The service information screen SC7 further includes a subscription icon A20 to proceed to a subscription process for subscription of the selected service.

In S60, the CPU 32 determines whether the subscription icon A20 in the service information screen SC7 has been selected by the user. In response to determining that the subscription icon A20 has been selected by the user (YES in S60), the CPU 32 executes the subscription process in S62. For example, in the subscription process, a screen for input of information required to subscribe to the selected service (e.g., a credit card number, a contractor name) is displayed. When S62 is completed, the CPU 32 ends the process of FIG. 4.

The CPU 32 skips S62 and ends the process of FIG. 4 in response to determining that the subscription icon A20 has not been selected by the user (NO in S60).

The CPU 32 proceeds to S56 in response to determining that the selected device has not been registered in association with the logged-in account information (NO in S52). In S56, the CPU 32 determines whether the response to the query in S52 indicates that the selected device has been registered in association with another account information. The CPU 32 skips the sequence from S58 to S62 and ends the process of FIG. 4 in response to determining that the response to the query in S52 indicates that the selected device has been registered in association with another account information (YES in S56). In contrast, the CPU 32 proceeds to S58 in response to determining that the response to the query in S52 indicates that the selected device has not been registered (NO in S56) and causes the display unit 14 to display the service information screen SC7.

The CPU 32 proceeds to S70 in response to determining that no login session is present with the service server 200 (NO in S50). In S70, the CPU 32 determines whether the selected device has been registered in the management table 204 in the service server 200. For example, when the selected device is already registered in the management table 204 (i.e., the serial number identifying the selected device is in the management table 204), an access token is supposed to be stored in the selected device. So, the CPU 32 queries the selected device as to whether an access token is stored therein. In case a response indicating that an access token is already stored is received from the selected device, the CPU 32 determines that the selected device has been registered in the management table 204. In contrast, in case a response indicating that an access token is not stored therein is received from the selected device, the CPU 32 determines that the selected device has not been registered in the management table 204.

The CPU 32 proceeds to S72 in response to determining that the selected device has not been registered in the management table 204 (NO in S70). S72 and S74 are the same as S58 and S60. The CPU 32 proceeds to S76 in response to determining that the subscription icon A20 has been selected by the user (YES in S74).

In S76, the CPU 32 causes the display unit 14 to display a login information screen SC8. The login information screen SC8 includes a user name entry field A12, a password entry field A13, a login icon A14, and an account registration icon A15. The account registration icon A15 is an icon for registration of new account information in the service server 200. In response to the account registration icon A15 being selected by the user, the CPU 32 causes the display unit 14 to display a screen for input of information required to register new account information (e.g., an e-mail address and a password). Then, the CPU 32 uses the new account information to establish a login session with the service server 200.

In S78, the CPU 32 determines whether a login session has been established with the service server 200 using the account information entered to the user name entry field A12 and the password entry field A13 or the newly registered account information. The CPU 32 proceeds to S80 in response to determining that a login session has been established with the service server 200 (YES in S78). S80 is the same as S62. The CPU 32 skips S80 and ends the process of FIG. 4 in response to determining that a login session has not been established with the service server 200 (NO in S78).

In response to determining that the selected device has already been registered in the management table 204 (YES in S70), the CPU 32 skips the steps from S72 onward and ends the process of FIG. 4.

According to the processes of FIGS. 2 and 4, the app 42 displays the login screen SC3 before executing the first setup. The login screen SC3 includes the user name entry field A4 and the password entry field A5. That is, the login to the service server 200 is prompted before the first setup. By logging into the service server 200 before the first setup, for example, the service subscription status becomes available to the app 42 prior to the second setup. Thus, the second setup can be executed following the first setup, taking the service subscription status of the MFP 100 into consideration.

For example, a comparative example is contemplated where the login screen for a login to the service server 200 is displayed after the first setup is completed. This comparative example requires the login screen to be displayed between the first setup and the second setup in order to know the service subscription status of the MFP 100 in the second setup. The display of login screen between the first setup and the second setup hinders the user from performing the first and second setups successionally, which may be inconvenient to the user. The configuration according to the embodiment allows the user to perform the first and second setups successionally since the login screen SC3 is displayed before the first setup, thereby reducing the inconvenience the user would feel.

In case the user indicated by the logged-in account information has already subscribed to the selected service, the app 42 does not display the service information screen SC7 (YES in S54 of FIG. 4). Unnecessary display of the service information screen SC7 can be prevented for the logged-in user who has already subscribed to the selected service.

Further, in case the selected device has been registered in association with another account information in the service table 202, the app 42 does not display the service information screen SC7 (YES in S56 of FIG. 4). For example, under a situation where the selected device has already subscribed to the subscription service, new account information cannot be registered in association with the selected device in order to prevent the automatic shipping service from being redundantly provided to the same selected device. For example, a comparative example is contemplated where the determination in S56 is not executed. In this comparative example, the service information screen SC7 which prompts use of the selected service is displayed despite the user being unable to further contract to use the selected service, which may cause confusion to the user. In the embodiment, such confusion to the user can be prevented since the service information screen SC7 is not displayed.

Further, in case the user instructs use of WFD, the app 42 does not execute the second setup (YES in S22 of FIG. 2), that is, the app 42 does not display the service information screen SC7. When WFD is used, the MFP 100 is not connected to the LAN 4. That is, the MFP 100 may not be connected to the internet 6. Without the connection to the internet 6, the user cannot use the services. The above configuration prevents unnecessary display of the service information screen SC7 when the user cannot user the services.

Further, in case the device setup icon A7 is selected by the user, the app 42 skips the login process and executes the first and second setups (NO in S16 of FIG. 2). In this case, the app 42 determines that no login session is present with the service server 200 and then displays the service information screen SC7 which prompts use of the selected service (NO in S50 and S72 of FIG. 4). Once a login session is established with the service server 200 via the login information screen SC8, the app 42 newly selects an available service from among the one or more available services (S38 in FIG. 2). Since the login session with the service server 200 is still present at this time, the app 42 determines in the display control process that a login session with the service server 200 is present and executes the steps from S52 onward. That is, the app 42 determines whether to display the service information screen SC7 for the remaining available services based on the account information used to establish the login session via the login information screen SC8. Even when a login session is established during the second setup, the second setup can still be continued considering the service subscription status of the MFP 100.

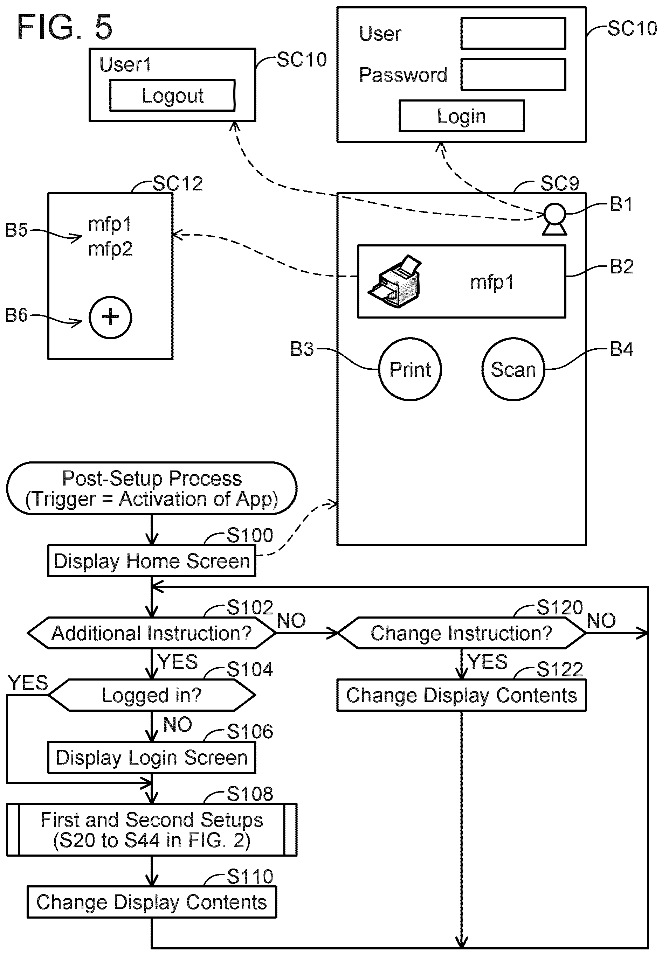

### Post-setup Process: FIG. 5

The process of FIG. 5 is executed after the process of FIG. 2. The process of FIG. 5 is executed according to the app 42 and is triggered by the app 42 being activated.

In S 100, the CPU 32 causes the display unit 14 to display a home screen SC9. The home screen SC9 includes an account icon B1, a device icon B2, a print icon B3, and a scan icon B4.

The account icon B1 is an icon for receiving instructions related to account information. In response to the account icon B1 being selected, the CPU 32 causes the display unit 14 to display an account screen SC10. In case the user is currently logged in the service server 200, the account screen SC10 displays the logged-in user name and an icon for logout from the service server 200. In case the user is not logged in the service server 200, the account screen SC10 displays an icon for login to the service server 200.

The device icon B2 is an icon for receiving instructions related to the selected device. The model name of the selected device is displayed on the device icon B2. In the example of FIG. 5, the model name "mfp1" is displayed. In a modification, an IP address or the serial number of the selected device may be displayed instead of the model name. In response to the device icon B2 being selected, the CPU 32 causes the display unit 14 to display an instruction screen SC12. The instruction screen SC12 includes a change icon B5 for receiving a change instruction to change the current control target, which is the selected device, to another control target and an add icon B6 for receiving an add instruction to add a new peripheral device as a control target. The change icon B5 includes a list of one or more control targets already registered in the app 42. The current control target, which is the selected device, is changed to another control target by one control target being selected from the list.

The print icon B3 is an icon for receiving an instruction to send a print execution instruction to the selected device. The scan icon B4 is an icon for receiving an instruction to send a scan execution instruction to the selected device.

In S102, the CPU 32 determines whether the add icon B6 in the instruction screen SC12 has been selected by the user. The CPU 32 proceeds to S104 in response to determining that the add icon B6 has been selected by the user (YES in S102).

S104 is the same as S50 in FIG. 4. The CPU 32 proceeds to S106 in response to determining that a login session with the service server 200 is not present (NO in S104). S106 is the same as S14 in FIG. 2. That is, the CPU 32 executes the login process (see S18) in case the login icon A6 is selected by the user, while the CPU 32 proceeds to S108 without executing the login process in case the device setup icon A7 is selected by the user.

In S108, the CPU 32 executes the same sequence as the sequence from S20 to S44 in FIG. 2, that is, the first and second setups. In S108, it is determined whether the service information screen SC7 is to be displayed for the new peripheral device based on the account information used for the login in S106. In S110, the CPU 32 changes the display of the device icon B2 based on the newly selected device in S108. When S110 is completed, the CPU 32 returns to S102.

The CPU 32 proceeds to S 120 in response to determining that the add icon B6 has not been selected by the user (NO in S102). In S120, the CPU 32 determines whether the change icon B5 in the instruction screen SC12 has been selected by the user. The CPU 32 proceeds to S122 in response to determining that the change icon B5 has been selected by the user (YES in S120).

In S 122, the CPU 32 changes the display of the device icon B2 based on the one control target selected via the change icon B5. The CPU 32 returns to S102 when S122 is completed or in response to determining that the change icon B5 has not been selected by the user (NO in S120).

According to the configuration above, in case the user inputs an add instruction to add a new peripheral device as a control target after the setups have been completed, the app 42 displays the login screen SC3 (S106 in FIG. 5) as it did in the initial setup. Then, the first and second setups are executed to register the new peripheral device in the app 42 (S108). For the first and second setups for the new peripheral device, the service subscription status becomes available to the app 42 prior to the second setup by logging in to the service server 200. Thus, the second setup can be executed following the first setup, taking the service subscription status of the new peripheral device into consideration.

### Correspondence Relationships

The app 42, the CPU 32, and the terminal device 10 are examples of "computer-readable instructions", "processor", and "terminal device", respectively. The controller 30 of the terminal device 10 is an example of "control device". The MFP 100 is an example of "image processing device". The subscription service and the automatic order service are examples of "service" and an example of "two or more services". The service server 200 is an example of "server". The sequence from S20 to S36 in FIG. 2 is an example of "first setup". The communication setup screen SC4, the device selection screen SC5, and the device setup screen SC6 in FIG. 3 are examples of "first setup screen". The sequence from S38 to S42 in FIG. 2 is an example of "second setup". The service information screen SC7 is an example of "second setup screen", "third setup screen", and "fourth setup screen". The login screen SC3 is an example of "login screen". The contract information acquired in S54 of FIG. 4 is an example of "subscription status information". The wireless connection according to WFD in S23 of FIG. 2 is an example of "direct connection". The login screen in S106 of FIG. 5 is an example of "second login screen".

The sequence from S20 to S36 in FIG. 2 is an example of "display, at a terminal device, a first setup screen". S14 is an example of "display, at the terminal device, a login screen". The sequence from S38 to S42 is an example of "display, at the terminal device, a second setup screen".

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below.

### Modification 1

The "computer-readable instructions" is not limited to the app 42 in the terminal device 10 and may be a computer program for controlling a server communicable with the terminal device 10. In this modification, the server sends image data to the terminal device 10 according to the computer program to display a screen corresponding to the image data at the terminal device 10. Further, the "control device" is not limited to the terminal device 10 and may be the above-mentioned server.

### Modification 2

The processes in FIGS. 2 to 5 may be partially implemented by a server communicable with the terminal device 10. In other words, the processes in FIGS. 2 to 5 may be implemented by a system in which the terminal device 10 and a server interact. The system in which the terminal device 10 and a server interact is an example of "system".

### Modification 3

The determination in S54 of FIG. 4 may not be executed. In this modification, the "subscription status information" may be omitted.

### Modification 4

The determination in S56 of FIG. 4 may not be executed. In this modification, "determine whether the image processing device is registered in the server" may be omitted.

### Modification 5

The service server 200 may provide a single service. Further, even when the service server 200 provides multiple services, S38 in FIG. 2 may not be executed. In this modification, "the service is a service the image processing device is able to use among the two or more services, and the second setup screen prompting subscription to the service is displayed at the terminal device" may be omitted.

### Modification 6

In S23 of FIG. 2, a connection according to another scheme different from WFD may be established. The other scheme is, for example, Bluetooth (registered trademark) or universal serial bus (USB). The connection according to the other scheme is an example of "direct connection", and the "direct connection" is established without involving a relay such as an access point.

### Modification 7

S23 in FIG. 2 may not be executed. In this modification, the "direct connection" may be omitted.

### Modification 8

The sequence from S70 to S80 in FIG. 4 may not be executed. In this modification, in case the login process is skipped in the login screen SC3, the service information screen SC7 is not displayed and the home screen SC9 may be displayed after the first setup is completed. This is because skipping the login process highly likely means that the user is not interested in the services. In this modification, the home screen SC9 is an example of "predetermined screen". Further, in this modification, "a screen different from the login screen" and "third setup screen" may be omitted.

### Modification 9

The sequence from S104 to S108 in FIG. 5 may not be executed. In this modification, "second login screen" and "fourth setup screen" may be omitted.

### Modification 10

In the embodiment above, the service server 200 is illustrated and described as a physical server, however, this need not always be the case. For example, the service server 200 may be, for example, a virtual server or a virtual machine. Further, the service server 200 may be a server on an intranet or a cloud server on the internet. The service server 200 may be established on the internet by a business operator different from the vendor. In another modification, the vendor may use an environment provided by an external cloud computing service without preparing hardware for the service server 200. In this case, the vendor may prepare computer-readable instructions (i.e., software) for the service server 200 and introduce them into the above environment to implement the service server 200.

### Modification 11

In the embodiment above, the processes of FIGS. 2 to 5 are implemented by the CPU 32 executing the app 42. Instead of this, at least one of the processes may be implemented by hardware such as a logic circuit.

## Claims

1. A computer program (42) for a control device (30), wherein the computer program (42) causes a processor (32) of the control device (30) to function as:
a first display unit (32) to configured to display, at a terminal device (10), a first setup screen (SC4, SC5, SC6) for prompting a first setup to use an image processing device (100);
a second display unit (32) to configured to, before the first setup screen (SC4, SC5, SC6) is displayed, display a login screen (SC3) at the terminal device (10), the login screen (SC3) being for a login to a server (200) configured to provide a service for the image processing device (10); and
a third display unit (32) to configured to, after the first setup has been completed, display a second setup screen (SC7) at the terminal device (10), the second setup screen (SC7) being for prompting a second setup to subscribe to the service (200).

2. The computer program (42) as in claim 1, wherein
the computer program (42) further causes the processor (32) to function as:
a receiving unit (32) configured to, in a case where a login to the server (200) succeeds in response to a user operation on the login screen (SC3), receive subscription status information from the server (200), wherein the subscription status information indicates whether a user identified by user information used in the login to the server (100) has subscribed to the service, wherein in a case where the subscription status information received from the server (200) indicates that the user has not subscribed to the service (200) yet, the second setup screen (SC7) is displayed at the terminal device (10), and
in a case where the subscription status information received from the server (200) indicates that the user has already subscribed to the service (200), the second setup screen (SC7) is not displayed at the terminal device (10).

3. The computer program (42) as in claim 1, wherein
the computer program (42) further causes the processor (32) to function as:
a determining unit (32) configured to, in a case where a login to the server (200) succeeds in response to a user operation on the login screen (SC3), determine whether the image processing device (100) is registered in the server (200) in association with other user information different from user information used in the login to the server (200),
wherein in a case where it is determined that the image processing device (100) is not registered in the server (200) in association with the other user information, the second setup screen (SC7) is displayed at the terminal device (10), and
in a case where it is determined that the image processing device (100) is registered in the server (200) in association with the other user information, the second setup screen (SC7) is not displayed at the terminal device (10).

4. The computer program (42) as in any one of claims 1 to 3, wherein
the server (200) is configured to provide two or more services for the image processing device (100),
the service is a service the image processing device (100) is able to use among the two or more services, and
the second setup screen (SC7) for prompting subscription to the service is displayed at the terminal device (10).

5. The computer program (42) as in any one of claims 1 to 3, wherein
in a case where an instruction for a direct connection with the image processing device (100) is inputted to the first setup screen (SC4, SC5, SC6) at the terminal device (10), the second setup screen (SC7) is not displayed at the terminal device (10).

6. The computer program (42) as in any one of claims 1 to 3, wherein
the image processing device (100) has a plurality of functions including a print function and a scan function, and
the computer program (42) further causes the processor (32) to function as:
a fourth display unit (32) configured to, in a case where the terminal device (10) receives a user operation for skipping a login to the server (200) via the login screen (SC3), display a predetermined screen (SC9) at the terminal device (10) after the first setup has been completed, the predetermined screen (SC9) including an object for input of an instruction to use the print function and an object for input of an instruction to use the scan function.

7. The computer program (42) as in any one of claims 1 to 3, wherein
the server (200) is configured to provide two or more services for the image processing device, and
in a case where the terminal device (10) receives a user operation for skipping a login to the server (200) via the login screen (SC3), the second setup screen (SC7) for subscription to a first service of the two or more services is displayed at the terminal device (10),
the computer program (42) further causes the processor (32) to function as:
a first display determining unit (32) configured to, in a case where a login to the server (200) succeeds in response to a user operation on a screen different from the login screen (SC3) after the second setup screen (SC7) is displayed at the terminal device (10), determine whether a third setup screen (SC7) is to be displayed at the terminal device (10) based on user information used in the login to the server, the third setup screen (SC7) being for subscription to a second service of the two or more services.

8. The computer program (42) as in any one of claims 1 to 3, wherein
the computer program (42) further causes the processor (32) to function as:
a fifth display unit (32) configured to, in a case where the terminal device (10) receives a user operation for instructing a setup for a new image processing device (100) after the first setup and the second setup have been completed and the terminal device (10) is not logged in the sever (200), display a second login screen for a login to the server (200) at the terminal device (10); and
a second display determining unit (32) configured to, in a case where a login to the server (200) succeeds in response to a user operation on the second login screen, determine whether a fourth setup screen (SC7) is to be displayed at the terminal device (10) based on user information used in the login to the server (200), the fourth setup screen (SC7) being for subscription to a service for the new image processing device (100).

9. The computer program (42) as in any one of claims 1 to 3, wherein
the image processing device (100) is a printing device, and
the service includes a service of automatically shipping a consumable article for the printing device.

10. A control device (30) comprising:
a first display unit (32) configured to display, at a terminal device (10), a first setup screen (SC4, SC5, SC6) for prompting a first setup to use an image processing device (100);
a second display unit (32) configured to, before the first setup screen (SC4, SC5, SC6) is displayed, display a login screen (SC3) at the terminal device (10), the login screen (SC3) being for a login to a server (200) configured to provide a service for the image processing device (100); and
a third display unit (32) configured to, after the first setup has been completed, display a second setup screen (SC7) at the terminal device (10), the second setup screen (SC7) being for prompting a second setup to subscribe to the service (200).

11. A system (2) comprising:
a first display unit (32) configured to cause a terminal device (10) to display a first setup screen (SC4, SC5, SC6) for prompting a first setup to use an image processing device (100);
a second display unit (32) configured to, before the first setup screen (SC4, SC5, SC6) is displayed, cause the terminal device (10) to display a login screen (SC3) for a login to a server (200) configured to provide a service for the image processing device (100); and
a third display unit (32) configured to, after the first setup has been completed, cause the terminal device (10) to display a second setup screen (SC7) for prompting a second setup to subscribe to the service (200).

12. A method of causing a terminal device (10) to display screens, comprising:
causing the terminal device to (10) display a first setup screen (SC4, SC5, SC6) for prompting a first setup to use an image processing device (100);
causing the terminal device (10) to, before the first setup screen (SC4, SC5, SC6) is displayed, display a login screen (SC3) for a login to a server (200) configured to provide a service for the image processing device (100); and
causing the terminal device (10) to, after the first setup has been completed, display a second setup screen (SC7) for prompting a second setup to subscribe to the service (200).
